# EUROPEAN PATENT SPECIFICATION

(11) **EP 0 734 689 B1**
(45) Date of publication and mention of the grant of the patent: **19.02.2003**
(21) Application number: 96830146.5
(22) Date of filing: 26.03.1996
(51) Int. Cl.: A61C 1/00, A61C 19/00

(54) **A system for activating and monitoring a dental unit**
Überwachungs- und Aktivierungssystem einer zahnärztlichen Einrichtung
Système d' activation et de surveillance d'une unité dentaire

(30) Priority: 27.03.1995 IT BO950132
(43) Date of publication of application: 02.10.1996
(73) Proprietor: CASTELLINI S.p.A., I-40013 Castel Maggiore (Bologna) (IT)
(72) Inventor: Castellini, Franco, 40123 Bologna (IT)
(74) Representative: Lanzoni, Luciano

(56) References cited:
- EP-A- 0 597 467
- WO-A-89/05613
- US-A- 5 300 926
- US-A- 5 371 332

## Description

The present invention relates to a system for activating and monitoring a dental unit.

In the technical sector relative to the development of dental units, there is currently a considerable increase in the study of special electronic - computerised systems which allow the continuous, immediate activation and control of all functions present on the dental unit during patients' visits.

These functions, in the form of specific data for all types of handpieces or accessories, are gathered and stored thanks to the systems using microprocessors linked both to viewers, which allow it to be read, and to sensor units, which allow identification of those parts in use and those which are idle.

One solution for this is described in patent EP - 391.967, which essentially envisages a viewer divided into a given number of fields for the display of functions of the handpieces and auxiliary functions, either on the said handpieces or on other parts of the dental unit, not connected to them. Each of these fields may be activated by selection sensors which, when the handpieces are disabled, allow access to subsequent display pages, that is to say, sub-pages of the main display page which allow the adjustment of accessories such as the dental unit chair, or, if a handpiece is activated, allow access to sub-pages which contain preset programs for the adjustment of the main functions of the handpiece, which can be changed by the dental surgeon.

This structure is designed to concentrate all instrument control and adjustment operations (the instruments here being the generic set of handpieces and accessories) within a single viewer divided into N operating - data fields, defined by a grid of X - Y coordinates, each controlled by sensors: however, this solution does not simplify the operations for changing function settings, instead it complicates the sequence of operations in "hierarchical" order which may be time-consuming during the visit, and may even lead to partial errors, since the data entered must be confirmed on the same sub-page each time in order to be stored as definitive data.

This division into fields is also linked to the use of "barrier" sensors, that is to say, having an emitter - receiver system distributed on vertical columns and horizontal rows so as to define a grid which lies over the grid defined by the fields; the individual field is activated by interrupting two rays which intersect over the field to create an unambiguous reference: this solution is neither the fastest nor the safest for the dental surgeon when using the viewer, when his/her attention is focused on the patient.

It is also known from document EP 597467 a control panel for a dental treatment station having function switching elements to which symbols characterising their function are assigned. The function switching elements comprise primary function switching elements, secondary function switching elements and selector switching elements, of which the symbols are continuously visible and to which a group of secondary function switching elements is assigned. The symbols of the secondary function switching elements which are assigned at that time to the switched-on selector switching element are optically made more prominent, at least in comparison with the symbols of the remaining secondary function switching elements.

The object of the present invention is, therefore, to overcome the afore-mentioned disadvantages by creating a system for activating and monitoring a dental unit which is extremely precise, clear and complete as regards the data which may be displayed, and whose programming is flexible, this being understood as the variation of the data set, by the dental surgeon, together with easier data entry.

The technical features of the present invention, in accordance with the aforesaid objects, are clearly illustrated in the claims herein, and the advantages of the said features are more clearly described in the detailed description below, with reference to the accompanying drawings, which illustrate an embodiment by way of example only, and in which:
- figure 1 is a perspective view of a dental unit fitted with the activation and monitoring system disclosed;
- figure 2 is a schematic front view of part of the system shown in figure 1, more precisely, the main console for system viewing and control;
- figure 3 is a schematic front view of another part of the system shown in figure 1, more precisely, an auxiliary control console;
- figure 4 is a block diagram of the stages of data processing and display by the system disclosed;
figures 5 to 12 show display pages of the system disclosed.

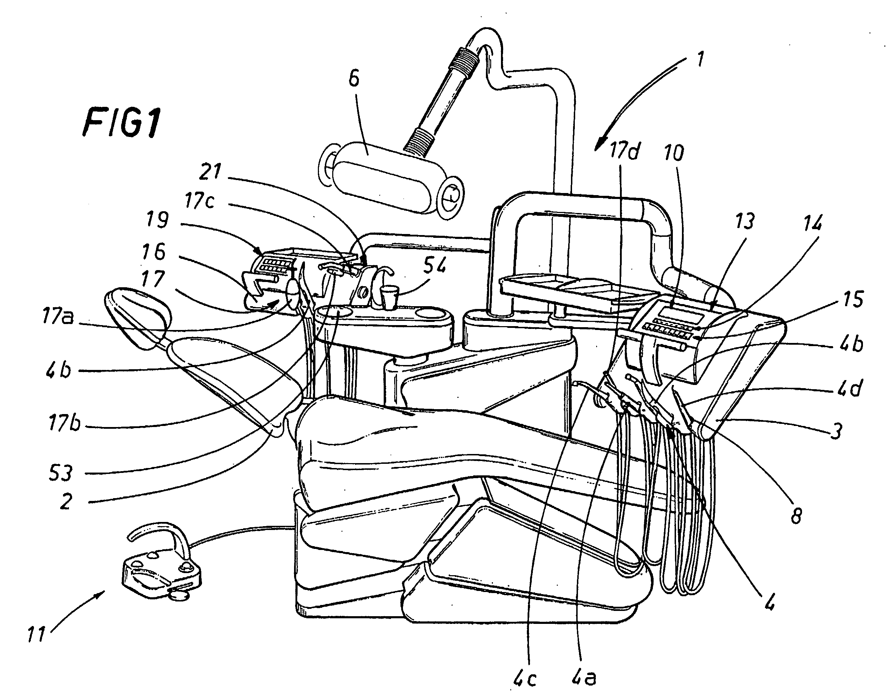

With reference to the accompanying drawings, and especially figures 1 to 3, a system for activating and monitoring a dental unit. 1 is described, the dental unit including, as is known, (see figure 1 in particular): a chair 2 with adjustable height and angle, a first support 3 (hereinafter called the instrument tablet) for instruments 4 or handpieces (as they are called hereinafter) which include, for example, the well-known micro-motor- 4a, syringe 4b, turbine 4c and the scaler 4d, or alternatively, a surgical needle (not illustrated here); there being also a lamp 6, a second support 16 for auxiliary instruments 17 such as further handpieces, e.g.: a polymerising lamp 17a, a pair of aspirators 17b, 17c.

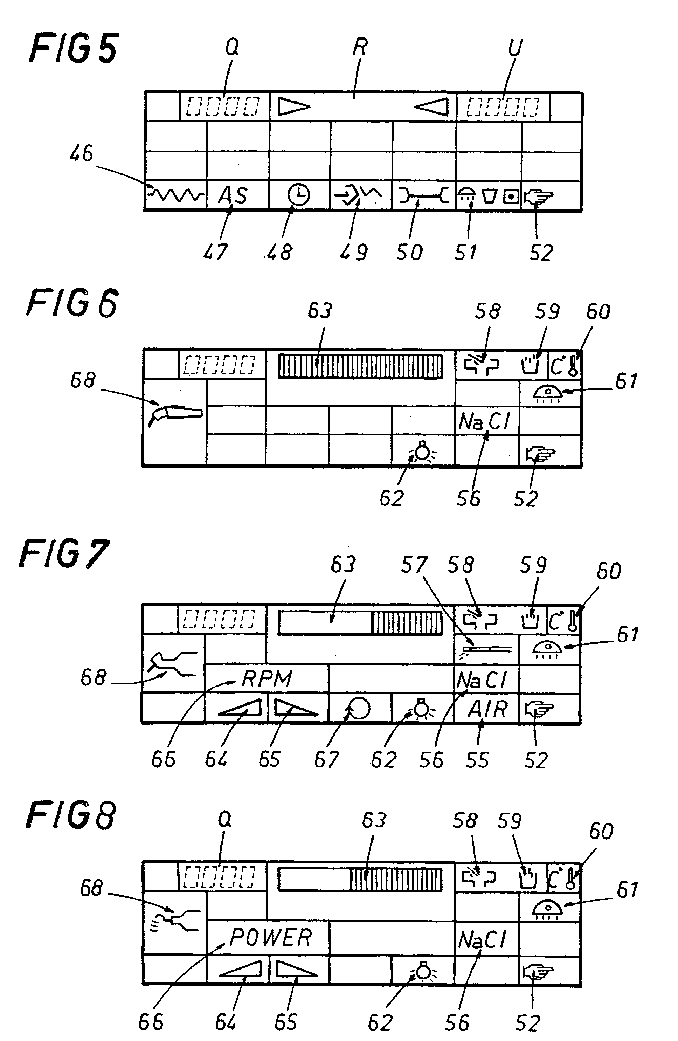

Also envisaged on the dental unit 1, are auxiliary pneumatic - hydraulic means 22 (see figure 4 in particular), that is to say, all of the tubes passing within the dental unit which allow the supply of fluids to the said handpieces 4 and 17 and to equipment 23 such as the cuspidor 53 and the rinsing tumbler 54. Each handpiece may also be fitted with corresponding parts 24 for illumination of the working zone (not fully illustrated, being of the known type).

Both the instrument tablet 3 and the second support 16 have corresponding means 7 and 20 for controlling the position of handpieces 4 and 17 (means of the known type, not illustrated) within respective seats 8 and 21 on the supports. The means 7 and 20 can send a signal indicating the selection of handpieces 4 and 17, that is to say, when one of them is picked up by the dental surgeon; to a microprocessor 9 which monitors the dental unit 1.

This microprocessor 9 also activates a viewer 10 for the display of the function data and accessory function data for the selected instruments (described more clearly below), within relative fields in the viewer, it being possible to vary settings using the microprocessor 9 depending on the type of operation to be carried out with the selected handpiece.

For improved overall control of the dental unit 1, the microprocessor 9 is also connected both to means 11 for controlling and activating the selected handpieces 4 and 17 (the known foot-pedal 11p), and to the adjustable chair 2 and lamp 6, which have corresponding second means 12 for controlling the relative accessory functions. Even the hydraulic - pneumatic circuits 23 and the lighting parts 24 are controlled by the microprocessor 9.

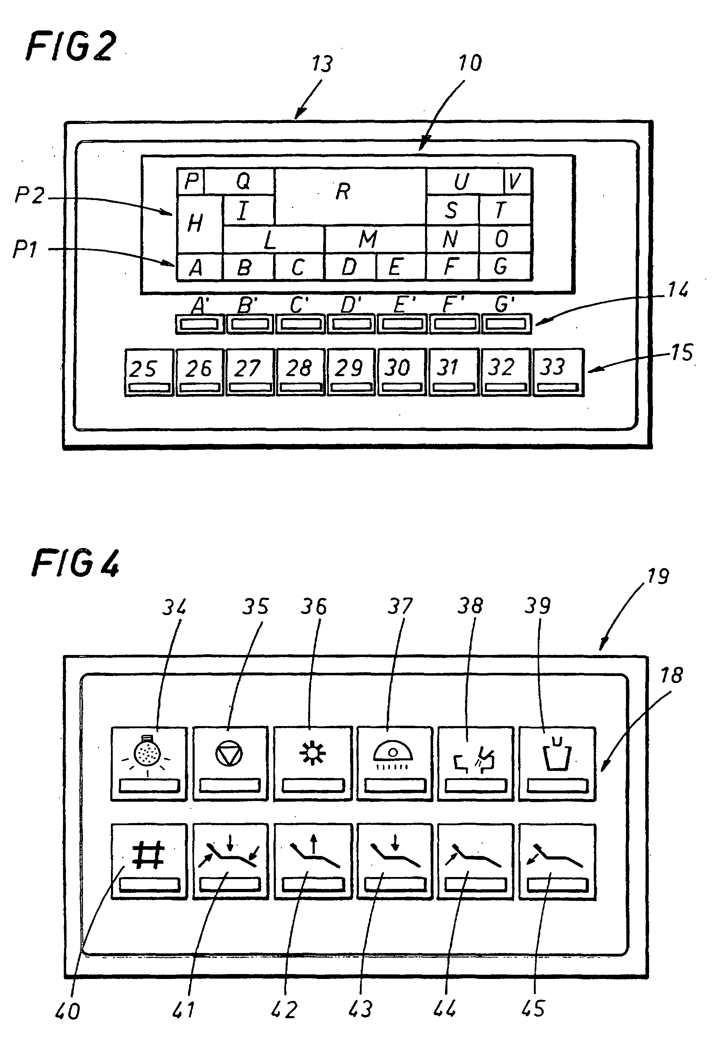

The system disclosed essentially consists of (see figure 2) at least one console 13 for a dental unit, said console preferably positioned on the main instrument tablet 3, and consisting of the viewer 10 divided into two portions P1 and P2: the first portion P1 having a fixed number of display fields labelled A to G, for the function data or fields for accessing display pages containing accessory function data, all on at least one line on the viewer, to which a corresponding series of first means 14 (for example, push-buttons) are connected, allowing variation or activation of the function corresponding to the display field shown or the access field on the viewer 10. The said first means 14 are positioned outside the viewer 10 and correlated to the same fixed number of fixed display fields A - G, and can therefore activate the function A' - G' corresponding to the display field shown each time on the viewer.

Moreover, on the main console 13, second means 15 are envisaged for changing - activating the display fields of the viewer 10 envisaged on the afore-mentioned second portion P2, that is to say, display fields for accessory and auxiliary functions of the dental unit which may or may not depend on the type of display field shown at that moment; the second means 15 are of the same type as the afore-mentioned means and are indicated by the numbers 25 to 33 in figure 2.

To make the system more complete, it may have a second console 19, positioned on the second support 16, in turn consisting of third means 18 (of the same type as the above), with which the assistant can directly activate part of the functions displayed on the viewer 10 relative to the second portion P2, or even irrespective of the display fields shown on the viewer and parts of the auxiliary handpieces 17.

Returning to the main console 13, the afore-mentioned fixed display fields A - G are set out in a horizontal row across the viewer 10, that is, on the bottom horizontal row of the viewer, so that they are above the respective first means 14, identical in number to the display fields, and also set out in a horizontal row.

Through the first means 14, these fields A - G always allow changes to the function data displayed or changes of display page, but the viewer 10 is normally completely divided into display fields, that is to say, as well as the fixed number of fields A - G in the first portion and correlated to the first means 14, there are other display fields, labelled H to V in figure 2, which in each display page define an information display field (defining the second portion P2).

For each of the handpieces 4 and 17 selected, four parallel display pages are envisaged relative to various data functions, each being similar to and independent of the others, said display pages retrieved and displayed using one of the first means 14: in short, the dental surgeon has the choice of four different programs for each handpiece 4 and 17 used thanks to the command G', whilst the fixed field G remains on the viewer 10, showing which display page level is valid at that moment, and thus allowing access to the next. Obviously, the layout of all of the activation means illustrated and the relative icons on the viewer are shown by way of example only, so as to more clearly illustrate the function of the system disclosed.

The second means 15 are also set out in a horizontal row on the main console 13, below the row formed by the first means 14 (clearly shown in figure 2).

A detailed analysis of the data display system reveals, in figure 5, a possible initial display page of the system for starting up the dental unit 1. This display page essentially includes the first portion P1 with the group of data functions A - G (reading from left to right): icon 46 indicating activation of a display page relating to an electrocardiograph (display page not illustrated) fitted on the dental unit 1; icon 47 indicating activation of a display page for the sterilisation system AS for the handpieces 4 and 17, which is not illustrated, but may include a display of the short and long sterilisation cycles, pausing of the cycle, control of the level of sterilising liquid in the tank, etc.; icon 48 envisages access to the system for adjustment of the time displayed in field Q of the initial display page.

The icon labelled 49 allows access to the display page which displays the position of the parts which form the chair 2, whose configuration can be varied each time using push-buttons 25 to 29 of the second means 15; from icon 50 it is possible to access a display page which can be used by the maintenance worker to check the various operating parameters of the dental unit, the actual hours of use of the individual parts, whilst the total number of hours for which the dental unit was switched on are displayed in field U on the initial display page. Preferably, the microprocessor will calculate the period for which the dental unit is used, that is to say, switched on, indicating to the dental surgeon or assistant when routine or extraordinary maintenance is required (e.g.: change of filters, substitution of physiological solution, etc.); another way of perfecting the system could be to connect a remote diagnosis device (a normal modem) directly to the processor, so that the said device dialogs directly (even without necessitating the intervention of dental staff) with the service centre, requesting a routine or emergency operation if the microprocessor develops an operating fault during use or during the pauses for self-testing.

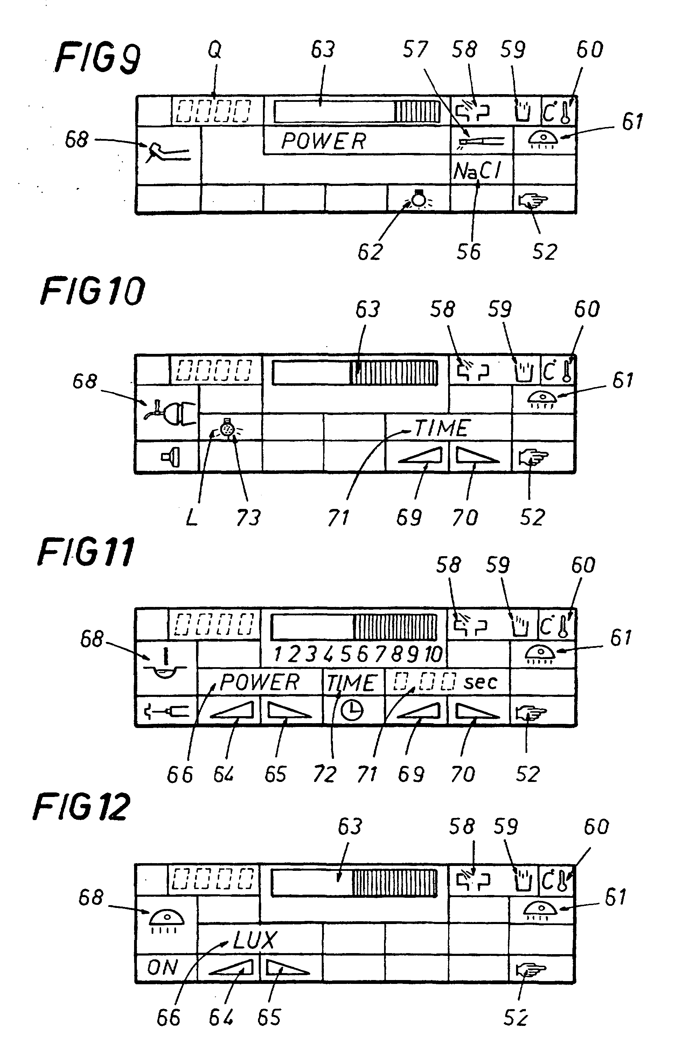

Icon 51 allows access to display pages for the adjustment of accessories such as the lamp 6 (display page shown in figure 12), the supply of water to the cuspidor 53 and of hot or cold water to the rinsing tumbler 54; by accessing the latter display page, it is also possible to decide which fluid (water or physiological solution, hereinafter indicated as NaCl) is supplied to both the accessories 54 and the handpieces 4 and 17 for the entire visit or treatment session. As described below, the data relative to this fluid is displayed in a special information display field. Finally, icon 52 allows access to a sub-page (if any) of the main display page. Obviously, the icons represent and display the function, but the commands A' - G' actually activate the functions relative to the icons.

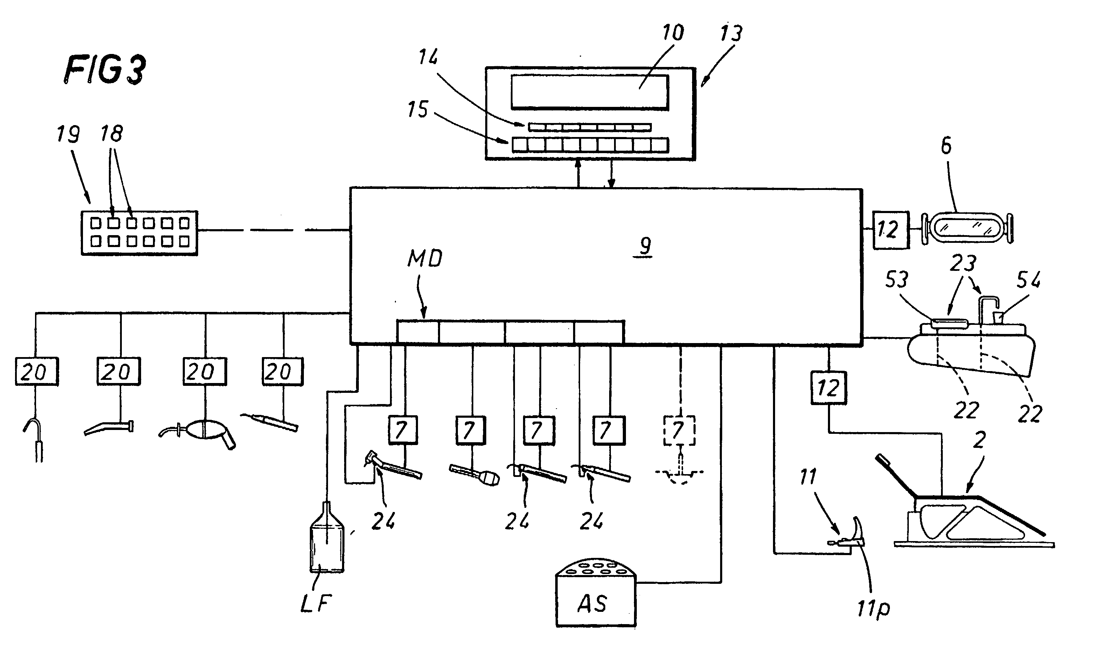

At the moment in which the dental surgeon picks up one of the handpieces 4 from its seat 8 on the instrument tablet 3, the microprocessor 9 recognises the instrument and automatically calls up the display page relative to the selected handpiece 4; figures 6 to 9 and figure 11 show the display pages for five handpieces 4 on the instrument tablet 3 (the syringe 4b, micro-motor 4a, scaler 4d, turbine 4c and surgical needle 17d respectively): as can be seen, in all of the display pages there are "default" display fields for accessory function data relating to both the selected handpiece 4 and the dental unit in general, located substantially on the right-hand side of the viewer 10 in the figures; such fields, labelled F, N, O, S, U and V in figure 3, allow the dental surgeon to obtain information about the type of fluid supplied to the handpiece, (fields F, N and S, and icons 55, 56 and 57 which clearly display whether there is air, water or physiological solution LF and whether or not they are supplied to the handpiece), about the possibility of supplying water to the cuspidor 53 and rinsing tumbler 54 (field U, icons 58 and 59), and beside these, the icon relating to the ideal temperature for the water supplied to the rinsing tumbler (field V, icon 60); below the latter is field O which displays activation of the lamp 6 with icon 61. Returning to operating field F, the function displayed (AIR) relates to the preselection of the "spray" without air effected using command F' on each handpiece 4 and 17 (used during surgery).

There is also field E which indicates with icon 62 whether or not the lighting parts 24 independent of the selected handpiece 4 (a bulb normally fitted with optic fibres for the transmission of light to the end of the handpiece) are activated.

In contrast, at the centre and on the left-hand side of the viewer 10 are display fields relating exclusively to the selected handpiece 4: the central field R contains icons 63 which vary in scale and may be related to the power, rpm, etc. of the selected handpiece 4 and can be changed using commands B' and C' (with corresponding fields B, C and L and icons 64, 65 and 66 showing the unit of measure and the increment or decrement).

In figure 7 there is also a field D and icon 67, which allows the direction of rotation of the micro-motor 4a to be checked.

Data field H contains icon 68, which displays the type of handpiece 4 selected by the dental surgeon, whilst field Q always contains the time data.

Returning to the left-hand side of the viewer 10, in field G, as in the main display page, icon 52 allows access, again using command G', to a display page parallel with that displayed: this allows the retrieval of a different type of programming variation on the selected handpiece 4 which the dental surgeon wishes to store with the data controlled by the microprocessor 9.

This solution, therefore, allows the dental surgeon to store four different settings for each type of handpiece 4 on the dental unit 1.

To speed up the display of data relative to the handpiece 4 selected each time, a memory MD is associated to the microprocessor 9 and, for each handpiece 4 and 17, records the last display page and relative operating and accessory function data activated by the last selection of that handpiece 4 from the instrument tablet 3: in other words, when the dental surgeon selects a handpiece 4, the display page changes to store operating or accessory data which is different or "dedicated" to a particular treatment session, uses the handpiece 4 then replaces it, the microprocessor 9 automatically recalls the main display page to the viewer 10. However, when the dental surgeon picks up the same handpiece again, the microprocessor 9 activates the memory MD which recalls the last display page for that handpiece to the viewer 10 again, so that the dental surgeon does not have to use the controls.

This data stored remains in the memory even if the dental unit 1 is switched off completely.

As regards the display pages for handpieces 17 located on the second support 16 (see figure 10 which shows, by way of example only, the polymerising lamp 17c), the structure of the display pages described above for the operating handpieces 4 partly applies here as well; the variations apply above all to fields E, F, M and N of the viewer which display the data, variables and timing of the use of these handpieces 17 (data essential for this type of equipment, both for the "life" of the handpiece and the correct treatment of materials in the oral cavity), thanks to icons 69, 70, 71 and 72. Another, different type of field is labelled L in figure 10 and, for the dental surgeon, represents the possibility of substantially checking the efficiency of the polymerising lamp at any moment (icon 73).

Moving on to the second means 15, some of these, labelled 25, 26, 27, 28 and 29, allow the adjustment of each part of the chair 2 or the resetting of their positions irrespective of the type of display page on the viewer, that is to say, the microprocessor 9 separates the viewer 10 - chair 2 functions; in contrast, push-button 30 allows access to a function for the storage of the position assumed by the chair 2 using the afore-mentioned push-buttons 25 to 28: in other words, the latter effect immediate corrections, but also allow the storage in the microprocessor 9 of four different types of position most suitable for the dental surgeon and patient; the programs are activated using the memory push-button 31.

The controls labelled 32 and 33 allow the dental surgeon to activate the supply of water to the rinsing tumbler 54 and cuspidor 53 respectively.

Similarly, controls 34 to 45 on the second console 19 effect the same functions mentioned above relative to the positioning and storage of the positions of the chair 2, the water supply to the rinsing tumbler 54 and cuspidor 53, but also envisage the afore-mentioned control for the polymerising lamp 17c (control 34) and the switching on and off of the lamp 6 (control 37).

Thanks to this system of interactive consoles connected to the microprocessor, the system disclosed allows complete control of the main functions of the entire dental unit, rapid and easy programming of any handpiece or accessory, leaving the dental surgeon plenty of freedom to develop "combinations" of programs on different handpieces without having to spend an excessive amount of time in front of the viewer. The structure of the control consoles is such that changing data is easy and there is no risk of changing the wrong data.

The system's flexibility is shown even by the division of the controls into those dedicated to the viewer and those more directly linked to the accessory functions, so that the dental surgeon does not necessarily have to use the viewer for operations which do not require it.

The present invention, thus designed for the said objects, may be subject to numerous variations, all encompassed by the original design concept, and all components may be replaced with technically equivalent parts.

## Claims

1. A system for activating and monitoring a dental unit (1) including at least one chair (2) with adjustable height and angle, a first main support (3) for the instruments (4) and a lamp (6); the first support (3) having first means (7) for controlling the position of the instruments (4) within respective seats (8) on the said first support (3), and designed to send a relative signal regarding selection of the instruments (4) to a microprocessor (9) which monitors the dental unit (1); the microprocessor (9) also activating a viewer (10) for the display of operating function data and accessory function data for the instrument selected, within fields on the viewer, it being possible to change the data using the microprocessor (9) depending on the type of operation to be carried out; the microprocessor (9) also being connected to means (11) for the control and activation of the selected instruments (4); the microprocessor (9) also being connected to the chair (2) and lamp (6) by corresponding second means (12) which control their accessory functions, the system envisaging at least one main independent console (13) consisting of:
- the viewer (10) including a first portion (P1) defining a fixed number of display fields (A - G) for operating function data or fields for accessing display pages containing accessory function data on at least one line of the viewer, connected to a corresponding series of
- first means (14) for changing - activating the said operating function data or access fields, positioned outside the viewer (10), correlated to the fixed number of fixed display fields (A - G), and
- second means (15) for changing - activating on a second portion (P2) including the remaining part of the viewer and defining at least part of the display fields for accessory function data, which may even be independent of the type of display page shown each time, said second means (15) being positioned outside the viewer (10),
the system being **characterised in that** said first means (14) activate the function shown each time in a corresponding display field (A-G) in the viewer (10).

2. The system as described in claim 1, **characterised in that** the fixed display fields (A - G) are set out in a horizontal row on the viewer (10) above the respective first means (14).

3. The system as described in claim 1, **characterised in that** for each instrument (4) selected at least four parallel display pages are envisaged, relating to different operating and accessory function data, similar to and independent of one another, which can be called up in sequence and displayed using the first means (14).

4. The system as described in claim 1, **characterised in that** the number of the said first means (14) is equal to that of the fixed display fields (A - G) and they are set out alongside one another along a horizontal row on the console (13).

5. The system as described in claim 1, **characterised in that** the second means (15) are set out in a horizontal row on the console (13) and are below the first means (14).

6. The system as described in claim 1, **characterised in that** each display page has a fixed display field (G) for accessing a subsequent independent display page which can be called up using the first means (14).

7. The system as described in claim 1, **characterised in that** the main console (13) is attached to the first main support (3) for the instruments (4).

8. The system as described in claim 1, **characterised in that**, for each independent display page, accessory data is constantly displayed irrespective of the instrument (4) selected each time and the said accessory data can be changed using the second means (15).

9. The system as described in claim 1, **characterised in that** the microprocessor is connected to a data memory (MD) designed to record, for each instrument (4), the last display page relative to operating function data and accessory function data activated by the selection of the corresponding instrument from the first main support (3), so that the said data is recalled and the relative last display page is shown again when the same instrument (4) is selected once more.

10. The system as described in claim 1, **characterised in that** one of the first means (14) activates an operating function (E') correlated to a display field (E) of maintenance details for the dental unit (1) when the latter is activated and when there is no selection signal for the instruments (4).

11. The system as described in claim 1, in which the dental unit has auxiliary hydraulic - pneumatic means (22) which supply the instruments (4) and equipment (23), connected to the microprocessor (9), **characterised in that** for each of the display pages for each of the main instruments (4), relative display fields (F, N, O, S, U) are envisaged, being correlated to corresponding states of activation for the supply of fluids to the instruments (4) and equipment (23), and a display field (V) correlated to the temperature at which the said fluids are supplied.

12. The system as described in claim 1, in which the instruments (4) have corresponding lighting parts (24) in their working zone, **characterised in that**, for each of the display pages for the corresponding instruments (4), a display field (E) is envisaged, being one of. the said fixed display fields, relative to the state of activation of the said lighting parts (24).

13. The system as described in claim 1, **characterised in that**, for each display page for each instrument (4), a display field (T) is present, being part of the second portion (P2), correlated to the state of activation of the lamp (6).

14. The system as described in claim 1, in which the dental unit has auxiliary hydraulic - pneumatic means (22) which supply the instruments (4) connected to the microprocessor (9) and are designed to allow the supply of fluids to the instruments (4) which may, upon request, be supplied with physiological solution (LF), **characterised in that**, each of the display pages for the corresponding main instruments (4) has a display field (N) showing the state of activation of the physiological solution (LF) supply to the instruments (4) which may be selected before selection of the instrument (4).

15. The system as described in claim 1 and in which the dental unit (1) has a second support (16) for auxiliary instruments (17), **characterised in that** third changing - activating means (18) are envisaged on a second console (19) attached to the second support (16) and designed to allow the separate, direct activation by the said data relative to the functions displayed on the viewer (10), of accessory function data irrespective of the display fields shown on the viewer and separate activation of the auxiliary instruments (17).

16. The system as described in claim 15, **characterised in that** the viewer (10) envisages corresponding display pages with display fields for function and accessory data for each of the auxiliary instruments (17) present on the second support (16).

## Patentansprüche

1. System zur Aktivierung und Überwachung einer Dentaleinheit (1), enthaltend wenigstens einen Stuhl (2) mit regulierbarer Höhen- und Winkeleinstellung, eine erste Haupthalterung (3) für die Instrumente (4) und eine Lampe (6); wobei die erste Halterung (3) erste Mittel (7) zur Kontrolle der Position der Instrumente (4) in den jeweiligen Sitzen (8) an der genannten ersten Halterung (3) aufweist, dazu bestimmt, ein entsprechendes Signal betreffend die Wahl der Instrumente (4) an einen Mikroprozessor (9) auszusenden, welcher die Dentaleinheit (1) überwacht; wobei der Mikroprozessor (9) ebenfalls ein Display (10) zur Anzeige der betrieblichen Funktionsdaten und der zusätzlichen Funktionsdaten des gewählten Instrumentes innerhalb von Feldern auf dem Display aktiviert, mit der Möglichkeit, die Daten unter Verwendung des Mikroprozessors (9) zu ändern, was von der Art des auszuführenden Eingriffs abhängig ist; wobei der Mikroprozessor (9) ebenfalls an Mittel (11) zur Betätigung und Aktivierung der gewählten Instrumente (4) angeschlossen ist; wobei der Mikroprozessor (9) ebenfalls an den Stuhl (2) und die Lampe (6) angeschlossen ist, und zwar durch entsprechende zweite Mittel (12), welche die Zusatzfunktionen steuern, und wobei das System wenigstens eine unabhängige Hauptkonsole (13) vorsieht, bestehend aus:
- dem Display (10), enthaltend einen ersten Abschnitt (P1), der eine feste Zahl von Sichtfeldern (A-G) für die betrieblichen Funktionsdaten oder Felder für den Zugang zu Displayseiten beschreibt, welche zusätzliche Funktionsdaten in wenigstens einer Zeile des Displays enthalten, angeschlossen an eine entsprechende Serie von
- ersten Mitteln (14) zum Ändern/Aktivieren der genannten betrieblichen Funktionsdaten oder Zugangsfeldern, die ausserhalb des Displays (10) angeordnet sind und mit der festen Zahl von festen Sichtfeldern (A-G) in Beziehung stehen, und
- zweiten Mitteln (15) zum Ändern/Aktivieren in einem zweiten Abschnitt (P2), welcher den verbleibenden Teil des Displays umfasst und wenigstens einen Teil der Sichtfelder für die zusätzlichen Funktionsdaten beschreibt, welche auch unabhängig von der jeweils gezeigten Displayseite sein können, wobei die genannten zweiten Mittel (15) ausserhalb des Displays (10) angeordnet sind, wobei das System **dadurch gekennzeichnet ist, dass** die genannten ersten Mittel (14) die jedesmal in dem entsprechenden Sichtfeld (A-G) auf dem Display (10) angezeigte Funktion aktivieren.

2. System nach Patentanspruch 1, **dadurch gekennzeichnet, dass** die festen Sichtfelder (A-G) in einer horizontalen Reihe auf dem Display (10) und oberhalb der jeweiligen ersten Mittel (14) angeordnet sind.

3. System nach Patentanspruch 1, **dadurch gekennzeichnet, dass** für jedes gewählte Instrument (4) wenigstens vier parallele Displayseiten vorgesehen sind, die sich auf die verschiedenen betrieblichen und zusätzlichen Funktionsdaten beziehen, einander ähnlich und unabhängig voneinander, welche aufeinanderfolgend abgerufen und unter Betätigung der ersten Mittel (14) angezeigt werden können.

4. System nach Patentanspruch 1, **dadurch gekennzeichnet, dass** die Zahl der genannten ersten Mittel (14) die gleiche ist wie die der festen Sichtfelder (A-G), und dass sie nebeneinander entlang einer horizontalen Reihe auf der Konsole (13) angeordnet sind.

5. System nach Patentanspruch 1, **dadurch gekennzeichnet, dass** die genannten zweiten Mittel (15) in einer horizontalen Reihe auf der Konsole (13) und unter den ersten Mitteln (14) angeordnet sind.

6. System nach Patentanspruch 1, **dadurch gekennzeichnet, dass** jede Displayseite ein festes Sichtfeld (G) für den Zugang zu einer nächsten unabhängigen Displayseite hat, welche unter Betätigung der ersten Mittel (14) abgerufen werden kann.

7. System nach Patentanspruch 1, **dadurch gekennzeichnet, dass** die Hauptkonsole (13) an der ersten Haupthalterung (3) für die Instrumente (4) befestigt ist.

8. System nach Patentanspruch 1, **dadurch gekennzeichnet, dass** für jede unabhängige Displayseite ständig zusätzliche Daten angezeigt werden, ungeachtet des jedesmal gewählten Instrumentes (4), und die genannten zusätzlichen Daten unter Betätigung der zweiten Mittel (15) geändert werden können.

9. System nach Patentanspruch 1, **dadurch gekennzeichnet, dass** der Mikroprozessor an einen Datenspeicher (MD) angeschlossen ist, dazu bestimmt, für jedes Instrument (4) die letzte Displayseite betreffend die betrieblichen Funktionsdaten und die zusätzlichen Funktionsdaten, aktiviert durch die Wahl des entsprechenden Instrumentes von der ersten Haupthalterung (3), aufzuzeichnen, so dass die genannten Daten erneut abgerufen werden können und die letzte Displayseite wieder angezeigt ist, wenn dasselbe Instrument (4) nochmals gewählt wird.

10. System nach Patentanspruch 1, **dadurch gekennzeichnet, dass** eins der ersten Mittel (14) eine Betriebsfunktion (E') aktiviert, bezogen auf ein Sichtfeld (E) für Wartungsdetails der Dentaleinheit (1), wenn letztere aktiviert ist und wenn kein Signal bezüglich der Wahl der Instrumente (4) vorhanden ist.

11. System nach Patentanspruch 1, bei welchem die Dentaleinheit hydraulisch-pneumatische Hilfsmittel (22) hat, welche die Instrumente (4) und die Anlage (23) speisen und an den Mikroprozessor (9) angeschlossen sind, **dadurch gekennzeichnet, dass** für jede der Displayseiten eines jeden der Hauptinstrumente (4) entsprechende Sichtfelder (F, N, O, S, U) vorgesehen sind, die mit den entsprechenden Zuständen der Aktivierung der Zufuhr von Flüssigkeiten an die Instrumente (4) und die Anlage (23) zusammenhängen, sowie ein Sichtfeld (V) betreffend die Temperatur, bei welcher die genannten Flüssigkeiten zugeführt werden.

12. System nach Patentanspruch 1, bei welchem die Instrumente (4) entsprechende Beleuchtungsteile (24) in ihrem Arbeitsbereich haben, **dadurch gekennzeichnet, dass** für jede der Displayseiten für die entsprechenden Instrumente (4) ein Sichtfeld (E) vorgesehen ist, das eins der genannten festen Sichtfelder ist, welches sich auf den Zustand der Aktivierung der genannten Beleuchtungsteile (24) bezieht.

13. System nach Patentanspruch 1, **dadurch gekennzeichnet, dass** für jede Displayseite eines jeden Instrumentes (4) ein Sichtfeld (T) vorhanden ist, welches Teil des zweiten Abschnittes (P2) ist und sich auf den Zustand der Aktivierung der Lampe (6) bezieht.

14. System nach Patentanspruch 1, bei welchem die Dentaleinheit hydraulisch-pneumatische Hilfsmittel (22) hat, welche die an den Mikroprozessor (9) angeschlossenen Instrumente (4) speisen und dazu bestimmt sind, den Zufluss von Flüssigkeiten an die Instrumente (4) zu ermöglichen, welche auf Abruf mit einer physiologischen Lösung (LF) gespeist werden können, **dadurch gekennzeichnet, dass** jede der Displayseiten für die entsprechenden wichtigsten Instrumente (4) ein Sichtfeld (N) aufweist, welches den Zustand der Aktivierung des Zuflusses der physiologischen Lösung (LF) an die Instrumente (4) anzeigt, die noch vor der Wahl des Instrumentes (4) gewählt werden kann.

15. System nach Patentanspruch 1, bei welchem die Dentaleinheit (1) eine zweite Halterung (16) für Hilfsinstrumente (17) enthält, **dadurch gekennzeichnet, dass** dritte Mittel zum Ändern/Aktivieren (18) an einer zweiten Konsole (19) vorgesehen sind, letztere angebracht an der zweiten Halterung (16) und dazu bestimmt, die getrennte, direkte Aktivierung durch die genannten Daten, die sich auf die auf dem Display (10) angezeigten Funktionen beziehen, der zusätzlichen Funktionsdaten zu erlauben, unabhängig von den auf dem Display gezeigten Sichtfeldern, und der getrennten Aktivierung der Hilfsinstrumente (17).

16. System nach Patentanspruch 15, **dadurch gekennzeichnet, dass** das Display (10) entsprechende Displayseiten vorsieht, und zwar mit Sichtfeldern für Funktions- und Zubehördaten für jedes Hilfsinstrument (17), das in der zweiten Halterung (16) vorhanden ist.

## Revendications

1. Un système d'activation et de surveillance d'une unité dentaire (1) comprenant au moins un fauteuil (2) réglable en hauteur et inclinaison, un premier support principal (3) pour des instruments (4) et une lampe (6) ; ledit premier support (3) étant pourvu de premiers moyens (7) destinés à contrôler la position des instruments (4) en question à l'intérieur de logements (8) respectifs présentés par ce même premier support (3) et destinés à envoyer un signal correspondant relatif à la sélection des instruments (4) à un microprocesseur (9) qui surveille l'unité dentaire (1) ; ledit microprocesseur (9) activant aussi un afficheur (10) destiné à visualiser, dans des champs prévus à cet effet sur ce même afficheur, des données dé fonction opérationnelles et des données de fonction accessoires relatives à l'instrument sélectionné, les données pouvant être modifiées par l'intermédiaire du microprocesseur (9) suivant le type d'opération à effectuer ; ledit microprocesseur (9) étant également relié à des moyens (11) de commande et d'activation des instruments (4) sélectionnés ; ledit microprocesseur (9) étant également relié au fauteuil (2) et à la lampe (6) susmentionnés par l'intermédiaire de deuxièmes moyens (12) correspondants qui contrôlent leurs fonctions accessoires, ledit système prévoyant au moins une console principale (13) indépendante composée de :
- ledit afficheur (10) comprenant une première portion (P1) définissant un nombre fixe de champs de visualisation (A - G) pour les données de fonction opérationnelles ou de champs d'accès à des pages-écrans contenant des données de fonction accessoires sur au moins une ligne de ce même afficheur, lequel est relié à une série correspondante de
- premiers moyens (14) de modification - activation des données de fonction opérationnelles ou des champs d'accès susmentionnés, placés à l'extérieur de l'afficheur (10), corrélés au nombre fixe de champs de visualisation fixes (A - G), et
- de deuxièmes moyens (15) de modification - activation d'une deuxième portion (P2) comprenant la partie restante de l'afficheur et définissant au moins une partie des champs de visualisation pour les données de fonction accessoires, qui peuvent même ne pas dépendre du type de page-écran affichée à chaque fois, lesdits deuxièmes moyens (15) étant placés à l'extérieur de l'afficheur (10),
ledit système étant **caractérisé en ce que** lesdits premiers moyens (14) activent la fonction qui est affichée à chaque fois dans un champ de visualisation (A - G) correspondant de l'afficheur (10).

2. Le système selon la revendication 1, **caractérisé en ce que** lesdits champs de visualisation fixes (A - G) sont disposés sur une rangée horizontale de l'afficheur (10) au-dessus des premiers moyens (14) respectifs.

3. Le système selon la revendication 1, **caractérisé en ce que**, pour chaque instrument (4) sélectionné, au moins quatre pages-écrans parallèles sont prévues, relatives à différentes données de fonction opérationnelles et accessoires, analogues et indépendantes l'une de l'autre, qui peuvent être appelées en séquence et affichées par l'intermédiaire des premiers moyens (14) susmentionnés.

4. Le système selon la revendication 1, **caractérisé en ce que** le nombre des premiers moyens (14) en question est égal au nombre des champs de visualisation fixes (A - G) et **en ce qu'**ils sont disposés l'un à côté de l'autre sur une rangée horizontale de ladite console (13).

5. Le système selon la revendication 1, **caractérisé en ce que** lesdits deuxièmes moyens (15) sont disposés sur une rangée horizontale de la console (13) et sont situés au-dessous des premiers moyens (14).

6. Le système selon la revendication 1, **caractérisé en ce que** chaque page-écran a un champ de visualisation fixe (G) permettant d'accéder à une page-écran indépendante successive qui peut être appelée par l'intermédiaire des premiers moyens (14).

7. Le système selon la revendication 1, **caractérisé en ce que** ladite console principale (13) est associée au premier support principal (3) des instruments (4).

8. Le système selon la revendication 1, **caractérisé en ce que**, pour chaque page-écran indépendante, des données accessoires sont visualisées en permanence indépendamment de l'instrument (4) sélectionné à chaque fois, lesdites données accessoires pouvant être modifiées par l'intermédiaire des deuxièmes moyens (15).

9. Le système selon la revendication 1, **caractérisé en ce que** ledit microprocesseur est relié à une mémoire de données (MD) destinée à enregistrer, pour chaque instrument (4), la dernière page-écran relative à des données de fonction opérationnelles et des données de fonction accessoires et activée par la sélection de l'instrument correspondant du premier support principal (3), de manière à rappeler lesdites données et à afficher à nouveau ladite dernière page-écran correspondante lorsque le même instrument (4) est encore une fois sélectionné.

10. Le système selon la revendication 1, **caractérisé en ce que** l'un des premiers moyens (14) active une fonction opérationnelle (E') corrélée à un champ de visualisation (E) affichant des spécifications d'entretien relatives à l'unité dentaire (1) lorsque cette dernière est activée et lorsqu'il n'y a aucun signal de sélection relatif aux instruments (4).

11. Le système selon la revendication 1, dans lequel l'unité dentaire est pourvue de moyens auxiliaires hydrauliques-pneumatiques (22) qui alimentent les instruments (4) et un équipement (23), reliés au microprocesseur (9) susmentionné, **caractérisé en ce que**, pour chacune des pages-écrans de chacun des instruments principaux (4), des champs de visualisation (F, N, O, S, U) correspondants sont prévus, corrélés à des états correspondants d'activation pour l'alimentation de fluides aux instruments (4) et à l'équipement (23), un champ de visualisation (V) corrélé à la température à laquelle lesdits fluides sont alimentés étant également prévu.

12. Le système selon la revendication 1, dans lequel lesdits instruments (4) sont pourvus d'organes (24) d'éclairage de leur zone de travail, **caractérisé en ce que**, pour chacune des pages-écrans des instruments (4) correspondants, un champ de visualisation (E) est prévu, parmi lesdits champs de visualisation fixes, relatif à l'état d'activation des organes d'éclairage (24) en question.

13. Le système selon la revendication 1, **caractérisé en ce que**, pour chaque page-écran de chaque instrument (4), un champ de visualisation (T) est présent, faisant partie de ladite deuxième portion (P2) et corrélé à l'état d'activation de la lampe (6).

14. Le système selon la revendication 1, dans lequel l'unité dentaire est pourvue de moyens auxiliaires hydrauliques-pneumatiques (22) qui alimentent les instruments (4) reliés au microprocesseur (9) et sont destinés à permettre l'alimentation de fluides à ces mêmes instruments (4), lesquels peuvent être alimentés, sur demande, avec une solution physiologique (LF), **caractérisé en ce que** chacune des pages-écrans relatives aux instruments principaux (4) correspondants a un champ de visualisation (N) indiquant l'état d'activation de l'alimentation en solution physiologique (LF) aux instruments (4) et qui peut être sélectionné avant que l'instrument (4) lui-même ne soit sélectionné.

15. Le système selon la revendication 1, dans lequel l'unité dentaire (1) est pourvue d'un deuxième support (16) pour des instruments auxiliaires (17), **caractérisé en ce que** des troisièmes moyens (18) de modification -activation sont prévus sur une deuxième console (19) associée à ce même deuxième support (16) et destinés à permettre l'activation séparée et directe d'une partie des données susmentionnées relatives aux fonctions visualisées sur l'afficheur (10), ou de données de fonction accessoires indépendamment des champs de visualisation affichés sur ce même afficheur, et l'activation séparée des instruments auxiliaires (17).

16. Le système selon la revendication 15, **caractérisé en ce que** ledit afficheur (10) prévoit des pages-écrans correspondantes avec des champs de visualisation pour des données de fonction et accessoires relatives à chacun des instruments auxiliaires (17) présent sur le deuxième support (16).
